(19) Europäisches Patentamt / European Patent Office / Office européen des brevets

(11) EP 4 787 488 A1

(12) **EUROPEAN PATENT APPLICATION**
published in accordance with Art. 153(4) EPC

(43) Date of publication:
05.08.2026 Bulletin 2026/32

(21) Application number: 24886384.7

(22) Date of filing: 01.11.2024

(51) International Patent Classification (IPC):
$H01M\ 4/525^{(2010.01)}$ $H01M\ 4/505^{(2010.01)}$
$H01M\ 4/36^{(2006.01)}$ $C01G\ 53/00^{(2025.01)}$
$H01M\ 4/131^{(2010.01)}$ $H01M\ 10/0525^{(2010.01)}$
$H01M\ 4/02^{(2006.01)}$

(52) Cooperative Patent Classification (CPC):
C01G 53/00; H01M 4/02; H01M 4/131; H01M 4/36;
H01M 4/505; H01M 4/525; H01M 10/052;
H01M 10/0525; Y02E 60/10

(86) International application number:
PCT/KR2024/017103

(87) International publication number:
WO 2025/095714 (08.05.2025 Gazette 2025/19)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 03.11.2023 KR 20230151123

(71) Applicant: **LG Chem, Ltd.**
**Seoul 07336 (KR)**

(72) Inventors:
- **HEO, Un Seon**
  **Daejeon 34122 (KR)**
- **YOU, Min Kyu**
  **Daejeon 34122 (KR)**
- **HA, Seoung Chul**
  **Daejeon 34122 (KR)**
- **KIM, Min Hoon**
  **Daejeon 34122 (KR)**
- **SEOK, Eun Jeong**
  **Daejeon 34122 (KR)**
- **SHIN, Ji A**
  **Daejeon 34122 (KR)**
- **LIM, Seung Woo**
  **Daejeon 34122 (KR)**
- **SHIN, Ye Won**
  **Daejeon 34122 (KR)**
- **KIM, Yern Seung**
  **Daejeon 34122 (KR)**
- **KIM, Sang Hun**
  **Daejeon 34122 (KR)**
- **KIM, Dong Chan**
  **Daejeon 34122 (KR)**

(74) Representative: **Hoffmann Eitle**
**Patent- und Rechtsanwälte PartmbB**
**Arabellastraße 30**
**81925 München (DE)**

(54) **CATHODE ACTIVE MATERIAL, AND CATHODE AND LITHIUM SECONDARY BATTERY COMPRISING SAME**

(57) The present invention relates to a positive electrode active material in the form of a single particle and capable of expressing optimal battery performance, and more particularly to, a positive electrode active material which includes a lithium composite transition metal oxide having a composition represented by Formula 1 described in the present specification, and in the form of a single particle composed of equal to or fewer than 10 primary particles, wherein the primary particles have a $D_{v,50}$ of 2.2 μm to 3.7 μm as derived from an SEM image, and have a small particle ratio of 5% to 10% according to Equation 1 described in the present specification, and a positive electrode and a lithium secondary battery including the positive electrode active material.

EP 4 787 488 A1

[FIG. 1]

[FIG. 1]

**Description**

<u>TECHNICAL</u> <u>FIELD</u>

<u>Cross-reference</u> <u>to</u> <u>Related</u> <u>Applications</u>

This application claims the benefit of Korean Patent Application No. 10-2023-0151123, filed on November 3, 2023, in the Korean Intellectual Property Office, the disclosure of which is incorporated herein in its entirety by reference.

<u>Technical</u> <u>Field</u>

The present invention relates to a positive electrode active material, and a positive electrode and a lithium secondary battery including the positive electrode active material, and more specifically, to a positive electrode active material in the form of a single particle, and a positive electrode and a lithium secondary battery including the positive electrode active material.

<u>BACKGROUND</u> <u>ART</u>

In recent years, as the technology development and demand for mobile devices and electric vehicles have increased, the demand for secondary batteries as an energy source has been rapidly increased. Among such secondary batteries, lithium secondary batteries having high energy density and voltage, long cycle life, and low self-discharging rate have been commercialized and widely used.

As a positive electrode active material for a lithium secondary battery, lithium transition metal oxides such as a lithium cobalt oxide such as $LiCoO_2$, a lithium nickel oxide such as $LiNiO_2$, a lithium manganese oxide such as $LiMnO_2$ or $LiMn_2O_4$, a lithium iron phosphate oxide such as $LiFePO_4$, and the like have been developed, and in recent years, a lithium composite transition metal oxide including two or more types of transition metals such as $Li[Ni_aCo_bMn_c]O_2$, $Li[Ni_aCo_bAl_c]O_2$, and $Li[Ni_aCo_bMn_cAl_d]O_2$ has been developed and widely used.

The lithium composite transition metal oxide including two or more types of transition metals developed up to date is typically prepared in the form of a spherical secondary particle in which tens to hundreds of primary particles are aggregated, and in recent years, in order to solve the structure and thermal stability problem of a positive electrode active material in the form of a secondary particle itself, the development of a positive electrode active material in the form of a single particle has been accelerated. Specifically, when a positive electrode active material in the form of a secondary particle is applied to a lithium secondary battery, there is a problem in that a large amount of gas is generated, thereby causing the volume of the battery to expand, and if the content of nickel in the positive electrode active material is increased to achieve a high capacity, there is also a problem in that the risk of fire increases, and therefore, there is a growing demand for the development of a positive electrode active materials in the form of a single particle having excellent stability.

A positive electrode active material in the form of a single particle is a concept in contrast to a positive electrode active material prepared by a typical method in the form of a spherical secondary particle formed by the aggregation of tens to hundreds of primary particles, and is a positive electrode active material composed of 10 or fewer primary particles, and since the size of a primary particle in the positive electrode active material in the form of a single particle has a very significant influence on the performance of the positive electrode active material, there is a need to control the size of the primary particle well.

Meanwhile, when a lithium secondary battery is manufactured by using the positive electrode active material in the form of a single particle, during a process in which the positive electrode active material is applied on a positive electrode current collector and then roll-pressed, particles of the positive electrode active material are easily cracked and collapsed. Accordingly, during charging and discharging of the lithium secondary battery, gas is generated due to a side reaction between the positive electrode active material and an electrolyte solution, and a swelling phenomenon occurs, so that there is a problem in that battery properties are deteriorated.

Therefore, there is a need to develop a positive electrode active material in the form of a single particle and capable of expressing optimal battery performance.

<u>DISCLOSURE</u> <u>OF</u> <u>THE</u> <u>INVENTION</u>

<u>TECHNICAL</u> <u>PROBLEM</u>

In order to solve the above-described problem, an object of the present invention is to provide a positive electrode active material in the form of a single particle and capable of expressing optimal battery performance.

In addition, another object of the present invention is to provide a lithium secondary battery having improved performance by including the above-described positive electrode active material.

## TECHNICAL SOLUTION

In order to achieve the above-described objects, the present invention provides a positive electrode active material, a positive electrode, and a lithium secondary battery.

(1) The present invention provides a positive electrode active material including a lithium composite transition metal oxide having a composition represented by Formula 1 below, and in the form of a single particle composed of equal to or fewer than 10 primary particles, wherein the primary particles have a $D_{v,50}$ of 2.2 $\mu$m to 3.7 $\mu$m as derived from an SEM image, and have a small particle ratio of 5% to 10% according to Equation 1 below.

$$[\text{Formula 1}] \qquad Li_{1+x}Ni_{a1}Co_{b1}Mn_{c1}Zr_{d1}Y_{e1}M_{f1}O_{2-y}A_y$$

In Formula 1 above, M is one or more selected from W, Cu, Sr, Mn, Ti, Mg, Mo, B, Sn, Fe, Zn, Si, and Al, A is one or more selected from F, Cl, Br, I, and S, and $-0.1 \leq x \leq 0.1$, $0 < a1 < 1$, $0 < b1 < 1$, $0 < c1 < 1$, $0 < d1 < 0.01$, $0 < e1 < 0.01$, $0 \leq f1 < 0.1$, $0 \leq y \leq 0.2$, and $a1+b1+c1+d1+e1+f1=1$, and

[Equation 1] Small particle ratio (%) = (Sum of areas of primary particles having a particle diameter of 1 $\mu$m or less as derived from SEM image/sum of areas of all primary particles as derived from SEM image) $\times$ 100.      [Equation 1]

(2) In (1) above, the present invention provides a positive electrode active material, wherein the primary particles have a $D_{v,50}$ of 2.5 $\mu$m to 2.8 $\mu$m as derived from an SEM image.

(3) In (1) or (2) above, the present invention provides a positive electrode active material, wherein the positive electrode active material has a $D_{50}$ of 3.5 $\mu$m to 4 $\mu$m as measured by using a particle size analyzer (PSA).

(4) In any one of (1) to (3) above, the present invention provides a positive electrode active material, wherein the lithium composite transition metal oxide is doped with 1000 ppm to 4000 ppm of Zr and 1000 ppm to 4000 ppm of Y.

(5) In any one of (1) to (4) above, the present invention provides a positive electrode active material, wherein the positive electrode active material further includes a coating layer formed on the lithium composite transition metal oxide, wherein the coating layer includes Al, W, or a combination thereof.

(6) The present invention provides a positive electrode including the positive electrode active material according to any one of (1) to (5) above.

(7) The present invention provides a lithium secondary battery including the above positive electrode according to (6) above, a negative electrode, a separator interposed between the positive electrode and the negative electrode, and an electrolyte.

## ADVANTAGEOUS EFFECTS

A positive electrode active material of the present invention includes a lithium composite transition metal oxide doped with Zr and Y, and the small particle ratio according to Equation 1 described in the present specification and the particle diameter of a primary particle satisfy specific ranges, so that particle breakage may be reduced, and the capacity, initial efficiency, resistance performance, and the like of a lithium secondary battery may be improved.

A positive electrode and a lithium secondary battery according to the present invention may be excellent in capacity, initial efficiency, resistance performance, and the like.

## BRIEF DESCRIPTION OF THE DRAWINGS

FIG. 1 is an SEM image of a positive electrode active material of Example 1.
FIG. 2 is an SEM image of a positive electrode active material of Example 3.

## BEST MODE FOR CARRYING OUT THE INVENTION

Hereinafter, the present invention will be described in more detail to facilitate understanding of the present invention.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

In the present specification, it should be understood that the term 'include,' 'comprise,' or 'have' is intended to specify the presence of stated features, numbers, steps, elements, or combinations thereof, but do not preclude the presence or addition of one or more other features, numbers, steps, elements, or combinations thereof.

In the present specification, the term 'on' includes not only a case in which a certain component is formed directly on an upper surface of another component, but also a case in which a third component is interposed therebetween.

In the present specification, a 'single particle form' is a concept in contrast to a spherical secondary particle form which is formed by the aggregation of tens to hundreds of primary particles manufactured by a typical method, and means a form composed of 10 or fewer primary particles. Specifically, in the present invention, the single particle form may be a single particle composed of one primary particle, or may be a secondary particle form in which two to ten primary particles are aggregated.

The 'primary particle' means the minimum unit of particles recognized when observing a positive electrode active material through a scanning electron microscope, and the 'secondary particle' means a secondary structural body formed by the aggregation of a plurality of primary particles.

In the present specification, the '$D_{v,50}$ of primary particles as derived from an SEM image' may be obtained by calculating the area of each of the primary particles through the number of pixels corresponding to each of n (at least 50) primary particles present in a specific magnification (ex., 5,000 times, 8,000 times) in the SEM image, calculating the particle diameter and volume of each of the primary particles present on the SEM image by using the radius value of a circle having the same area as the area of each of the primary particles, and calculating the particle diameter at a point of 50% in a volume cumulative distribution according to a particle diameter.

In the present specification, the 'sum of areas of primary particles having a particle diameter of 1 $\mu$m or less as derived from an SEM image' may be obtained by calculating the area of each of the primary particles through the number of pixels corresponding to each of n (at least 50) primary particles present in a specific magnification (ex., 5,000 times, 8,000 times) in the SEM image, obtaining the particle diameter of each of the primary particles present on the SEM image by using the radius value of a circle having the same area as the area of each of the primary particles, and adding the areas of primary particles having a particle diameter of 1 $\mu$m or less among the primary particles.

In the present specification, the 'sum of areas of all primary particles as derived from an SEM image' may be obtained by calculating the area of each of the primary particles through the number of pixels corresponding to each of n (at least 50) primary particles present in a specific magnification (ex., 5,000 times, 8,000 times) in the SEM image, obtaining the particle diameter of each of the primary particles present on the SEM image by using the radius value of a circle having the same area as the area of each of the primary particles, and adding the areas of all primary particles.

In the present specification, the '$D_{50}$ as measured by using a particle size analyzer (PSA)' means a particle diameter at a point of 50% in a volume cumulative distribution according to a particle diameter. The $D_{50}$ may be measured by dispersing powder to be measured in a dispersion medium, and then introducing the mixture into a commercially available laser diffraction particle size measurement device (for example, S3500 of Microtrac Co., Ltd.) to calculate a particle size distribution by measuring the difference in diffraction pattern according to a particle size when particles pass through a laser beam, and then calculating the particle diameter at a point of 50% in a volume cumulative distribution according to a particle diameter in the measurement device.

## Positive electrode active material

The present invention provides a positive electrode active material including a lithium composite transition metal oxide having a composition represented by Formula 1 below, and in the form of a single particle composed of equal to or fewer than 10 primary particles, wherein the primary particles have a $D_{v,50}$ of 2.2 $\mu$m to 3.7 $\mu$m as derived from an SEM image, and have a small particle ratio of 5% to 10% according to Equation 1 below. The lithium composite transition metal oxide may have a layered structure.

[Formula 1]     $Li_{1+x}Ni_{a1}Co_{b1}Mn_{c1}Zr_{d1}Y_{e1}M_{f1}O_{2-y}A_y$

In Formula 1 above, M is one or more selected from W, Cu, Sr, Mn, Ti, Mg, Mo, B, Sn, Fe, Zn, Si, and Al, A is one or more selected from F, Cl, Br, I, and S, and $-0.1 \leq x \leq 0.1$, $0 < a1 < 1$, $0 < b1 < 1$, $0 < c1 < 1$, $0 < d1 < 0.01$, $0 < e1 < 0.01$, $0 \leq f1 < 0.1$,

0≤y≤0.2, and a1+b1+c1+d1+e1+f1=1, and

[Equation 1] Small particle ratio (%) = (Sum of areas of primary particles having a particle diameter of 1 $\mu$m or less as derived from SEM image/sum of areas of all primary particles as derived from SEM image) × 100.     [Equation 1]

The present inventors have found that if a positive electrode active material includes the above-described lithium composite transition metal oxide in the form of a single particle and doped with Zr and Y, the particle size of a primary particle satisfies a specific range, and the small particle ratio according to Equation 1 described in the present specification is 5% to 10%, the breakage of the positive electrode active material is reduced during roll-pressing for the manufacture of a lithium secondary battery, thereby improving the capacity, initial efficiency, and resistance performance of the lithium secondary battery, and have completed the present invention.

According to the present invention, the lithium composite transition metal oxide is doped with Zr and Y. In this case, Zr is stably doped on a transition metal layer, so that a stable structure may be maintained even if the intercalation and deintercalation of lithium are repeated due to repeated charging and discharging. In addition, Y acts as a flux material during firing, so that an optimal primary particle size may be implemented even at a relatively low temperature, which is advantageous for resistance or rate properties.

Meanwhile, if the lithium composite transition metal oxide is not doped with Zr, a structure retention rate is reduced, which is disadvantageous in terms of lifespan performance, and if not doped with Y, the firing temperature is required to be further increased to implement an optimal primary particle size, which is disadvantageous in terms of resistance or rate properties.

According to the present invention, in order to allow the lithium composite transition metal oxide to have optimal performance in terms of lifespan and resistance while having a desired size of a primary particle, the lithium composite transition metal oxide may be doped with 1,000 ppm to 4,000 ppm of Zr and 1,000 ppm to 4,000 ppm of Y.

The content of Zr may be, with respect to the total weight of the lithium composite transition metal oxide, 1,000 ppm or greater, 1,100 ppm or greater, 1,200 ppm or greater, 1,300 ppm or greater, or 1,400 ppm or greater, and 1,500 ppm or less, 1,600 ppm or less, 1,700 ppm or less, 1,800 ppm or less, 1,900 ppm or less, 2,000 ppm or less, 2,100 ppm or less, 2,200 ppm or less, 2,300 ppm or less, 2,400 ppm or less, 2,500 ppm or less, 2,600 ppm or less, 2,700 ppm or less, 2,800 ppm or less, 2,900 ppm or less, 3,000 ppm or less, 3,100 ppm or less, 3,200 ppm or less, 3,300 ppm or less, 3,400 ppm or less, 3,500 ppm or less, 3,600 ppm or less, 3,700 ppm or less, 3,800 ppm or less, 3,900 ppm or less, or 4,000 ppm or less.

The content of Y may be, with respect to the total weight of the lithium composite transition metal oxide, 1,000 ppm or greater, 1,100 ppm or greater, 1,200 ppm or greater, 1,300 ppm or greater, 1,400 ppm or greater, 1,500 ppm or greater, 1,600 ppm or greater, 1,700 ppm or greater, 1,800 ppm or greater, 1,900 ppm or greater, 2,000 ppm or greater, 2,100 ppm or greater, 2,200 ppm or greater, 2,300 ppm or greater, 2,400 ppm or greater, 2,500 ppm or greater, 2,600 ppm or greater, 2,700 ppm or greater, 2,800 ppm or greater, or 2,900 ppm or greater, and 3,000 ppm or less, 3,100 ppm or less, 3,200 ppm or less, 3,300 ppm or less, 3,400 ppm or less, 3,500 ppm or less, 3,600 ppm or less, 3,700 ppm or less, 3,800 ppm or less, 3,900 ppm or less, or 4,000 ppm or less.

If the content of Zr is within the above-described range, it is possible to implement a high capacity while having an excellent structure retention rate according to charging and discharging, and if the content of Y is within the above-described range, it is possible to implement an optimal primary particle size even at a relatively low temperature, so that it is possible to implement a high capacity while being advantageous in terms of resistance or rate properties.

According to the present invention, the positive electrode active material has a small particle ratio of 5% to 10% according to Equation 1. If the small particle ratio is 5% to 10%, optimal performance is achieved in terms of battery performance, particle breakage, and roll-pressing density.

Meanwhile, if the small particle ratio of the positive electrode active material is less than 5%, there is a problem in that the efficiency and resistance performance of a battery are deteriorated, and if greater than 10%, there is a problem in that particle breakage and roll-pressing density are deteriorated.

According to the present invention, the primary particles may have a $D_{v,50}$ of 2.2 $\mu$m to 3.7 $\mu$m, preferably 2.5 $\mu$m to 2.8 $\mu$m, as derived from an SEM image. In this case, optimal performance is achieved in terms of battery performance, particle breakage, and roll-pressing density. Meanwhile, if the $D_{v,50}$ of the primary particles is less than 2.2 $\mu$m, there is a problem in that the roll-pressing density and/or the lifetime performance of a battery are deteriorated, and if greater than 3.7 $\mu$m, there is a problem in that the efficiency and/or resistance performance of a battery are deteriorated.

The $D_{v,50}$ of the primary particles may be controlled by the type and content of a doping element, the amount of addition of lithium raw materials, the firing temperature, and the like during the preparation of the positive electrode active material.

According to the present invention, the positive electrode active material may have a $D_{50}$ of 3.5 $\mu$m to 4.0 $\mu$m as measured by using a particle size analyzer (PSA). The $D_{50}$ of the positive electrode active material may be 3.50 $\mu$m or

greater, and 3.80 $\mu$m or less, 3.85 $\mu$m or less, 3.90 $\mu$m or less, 3.95 $\mu$m or less, or 4.0 $\mu$m or less. If the $D_{50}$ of a positive electrode active material as measured by using a particle size analyzer (PSA) is within the above-described range, both the lifespan and capacity properties of a battery including the positive electrode active material may be improved, so that the electrochemical performance may be optimized. For reference, if the $D_{50}$ is less than 3.5 $\mu$m, the lifespan of the battery may be reduced, and if the $D_{50}$ is greater than 4.0 $\mu$m, the capacity of the battery may be reduced.

According to the present invention, a ratio (amount of fine particle generation) of the number of particles having a particle diameter of less than 1 $\mu$m, as measured by a particle size analyzer (PSA) with respect to the total number of particles after placing 3 g of the positive electrode active material in a mold having an inner diameter of 13 mm, and then pressing the same at 9 tons for 1 minute may be 2.5% or less, specifically 2.0% or less, 1.5% or less, 1.0% or less, or 0.6% or less. In this case, a specific surface area in which particles and an electrolyte solution come into contact is reduced, so that a side reaction may be suppressed, a capacity retention rate (lifespan) according to charging and discharging may be improved, and gas generation may be reduced.

According to the present invention, the lithium composite transition metal oxide may include 60 mol% or greater of nickel with respect to the total number of moles of metals excluding lithium. That is, the lithium composite transition metal oxide may be a high-nickel-based lithium composite transition metal oxide. In this case, the energy density of a lithium secondary battery may be improved.

According to the present invention, in Formula 1 above, the x may be -0.1 or greater, -0.09 or greater, -0.08 or greater, -0.07 or greater, -0.06 or greater, -0.05 or greater, -0.04 or greater, -0.03 or greater, -0.02 or greater, -0.01 or greater, or 0 or greater, and 0.06 or less, 0.07 or less, 0.08 or less, 0.09 or less, or 0.1 or less. When the x satisfies the above-described range, high-capacity properties and a high energy density per unit volume may be implemented.

According to the present invention, in Formula 1 above, the a1 represents the atomic fraction of nickel among metal elements in the lithium composite transition metal oxide, and may be 0.6 or greater, 0.61 or greater, or 0.62 or greater, and 0.7 or less, 0.71 or less, 0.72 or less, 0.73 or less, 0.74 or less, 0.75 or less, 0.76 or less, 0.77 or less, 0.78 or less, 0.79 or less, 0.8 or less, 0.81 or less, 0.82 or less, 0.83 or less, 0.84 or less, 0.85 or less, 0.86 or less, 0.87 or less, 0.88 or less, 0.89 or less, 0.9 or less, 0.91 or less, 0.92 or less, 0.93 or less, 0.94 or less, 0.95 or less, 0.96 or less, 0.97 or less, 0.98 or less, 0.99 or less, or less than 1. When the a1 satisfies the above-described range, high-capacity properties may be implemented, and particularly, if the a1 is 0.6 to 0.75, a high energy density is exhibited during high-voltage driving, so that high-capacity properties may be implemented.

According to the present invention, in Formula 1 above, the b1 represents the atomic fraction of cobalt among metal elements in the lithium composite transition metal oxide, and may be greater than 0, 0.01 or greater, 0.02 or greater, 0.03 or greater, 0.04 or greater, or 0.05 or greater, and 0.10 or less, 0.11 or less, 0.12 or less, 0.13 or less, 0.14 or less, 0.15 or less, 0.16 or less, 0.17 or less, 0.18 or less, 0.19 or less, 0.20 or less, 0.21 or less, 0.22 or less, 0.23 or less, 0.24 or less, 0.25 or less, 0.26 or less, 0.27 or less, 0.28 or less, 0.29 or less, 0.30 or less, 0.31 or less, 0.32 or less, 0.33 or less, 0.34 or less, 0.35 or less, 0.36 or less, 0.37 or less, 0.38 or less, 0.39 or less, or less than 0.4. When the b1 satisfies the above-described range, stability may be improved during charging and discharging, and rate properties may be improved.

According to the present invention, in Formula 1 above, the c1 represents the atomic fraction of manganese among metal elements in the lithium composite transition metal oxide, and may be greater than 0, 0.01 or greater, 0.02 or greater, 0.03 or greater, 0.04 or greater, 0.05 or greater, 0.06 or greater, 0.07 or greater, 0.08 or greater, 0.09 or greater, 0.1 or greater, 0.11 or greater, 0.12 or greater, 0.13 or greater, 0.14 or greater, 0.15 or greater, 0.16 or greater, 0.17 or greater, 0.18 or greater, 0.19 or greater, 0.2 or greater, 0.21 or greater, 0.22 or greater, 0.23 or greater, 0.24 or greater, 0.25 or greater, 0.26 or greater, 0.27 or greater, 0.28 or greater, 0.29 or greater, or 0.30 or greater, and 0.32 or less, 0.33 or less, 0.34 or less, 0.35 or less, 0.36 or less, 0.37 or less, 0.38 or less, 0.39 or less, or less than 0.4. When the c1 satisfies the above-described range, high-capacity properties may be implemented. In addition, high-temperature stability may increase, and a side reaction with an electrolyte solution may relatively decrease.

According to the present invention, in Formula 1 above, the d1 represents the atomic fraction of zirconium among metal elements in the lithium composite transition metal oxide, and may be 0 or greater, or 0.0005 or greater, and 0.001 or less, 0.002 or less, 0.003 or less, 0.004 or less, 0.005 or less, 0.006 or less, 0.007 or less, 0.008 or less, 0.009 or less, or 0.01 or less. When the d1 satisfies the above-described range, the crystal structure stability of a positive electrode active material may be improved, and the resistance and lifespan of a battery may be improved due to an increase in the structure stability.

According to the present invention, in Formula 1 above, the e1 represents the atomic fraction of yttrium among metal elements in the lithium composite transition metal oxide, and may be 0 or greater, or 0.001 or greater, and 0.002 or less, 0.003 or less, 0.004 or less, 0.005 or less, 0.006 or less, 0.007 or less, 0.008 or less, 0.009 or less, or 0.01 or less. When the e1 satisfies the above-described range, the growth of particles may be improved, so that the capacity and lifespan may be improved.

According to the present invention, in Formula 1 above, the f1 represents the atomic fraction of an M element among metal elements in the lithium composite transition metal oxide, and may be 0 or greater, and 0.01 or less, 0.02 or less, 0.03 or less, 0.04 or less, 0.05 or less, 0.06 or less, 0.07 or less, 0.08 or less, 0.09 or less, or 0.10 or less. When the f1 satisfies the above-described range, the crystal structure stability of a positive electrode active material may be improved, and the particle shape may be improved.

According to the present invention, the positive electrode active material may further include a coating layer formed on the lithium composite transition metal oxide, wherein the coating layer may include Al, W, or a combination thereof. In this case, the capacity and lifespan of a battery including the positive electrode active material may have optimal performance.

According to the present invention, the content of Al contained in the coating layer may be 1,000 ppm to 2,000 ppm with respect to the total weight of the positive electrode active material. The content of Al may specifically be, with respect to the total weight of the positive electrode active material, 1,000 ppm or greater, 1,100 ppm or greater, 1,200 ppm or greater, 1,300 ppm or greater, or 1,400 ppm or greater, and 1,500 ppm or less, 1,600 ppm or less, 1,700 ppm or less, 1,800 ppm or less, 1,900 ppm or less, or 2,000 ppm or less. In this case, the electrical conductivity of the positive electrode active material is improved, and the generation of by-products formed by a side reaction with an electrolyte solution in a battery is suppressed, so that the capacity properties, resistance properties, lifespan properties, and the like of the positive electrode active material may be improved.

According to the present invention, the content of W contained in the coating layer may be 2,000 ppm to 4,000 ppm with respect to the total weight of the positive electrode active material. The content of W may specifically be, with respect to the total weight of the positive electrode active material, 2,000 ppm or greater, 2,100 ppm or greater, 2,200 ppm or greater, 2,300 ppm or greater, 2,400 ppm or greater, 2,500 ppm or greater, 2,600 ppm or greater, 2,700 ppm or greater, 2,800 ppm or greater, or 2,900 ppm or greater, and 3,000 ppm or less, 3,100 ppm or less, 3,200 ppm or less, 3,300 ppm or less, 3,400 ppm or less, 3,500 ppm or less, 3,600 ppm or less, 3,700 ppm or less, 3,800 ppm or less, 3,900 ppm or less, or 4,000 ppm or less. In this case, the electrical conductivity of the positive electrode active material is improved, and the generation of by-products formed by a side reaction with an electrolyte solution in a battery is suppressed, so that the capacity properties, resistance properties, lifespan properties, and the like of the positive electrode active material may be improved.

### Method for preparing positive electrode active material

The positive electrode active material according to the present invention may be prepared by the following method for preparing a positive electrode active material. However, the present invention is not limited thereto.

A method for preparing a positive electrode active material in the form of a single particle according to the present invention includes (A) mixing a positive electrode active material precursor having a composition represented by Formula 2 below, a zirconium-containing raw material, a yttrium-containing raw material, and a lithium-containing raw material to prepare a mixture, and (B) under an atmospheric atmosphere, sequentially subjecting the mixture to primary firing at 600 °C to 850 °C, secondary firing at 960 °C to 970 °C, and then tertiary firing at 500 °C to 850 °C to prepare a fired product.

$$[\text{Formula 2}] \qquad Ni_{a2}Co_{b2}Mn_{c2}M^1_{d2}(OH)_2$$

In Formula 2 above, $M^1$ is one or more selected from Zr, Y, W, Cu, Sr, Mn, Ti, Mg, Mo, B, Sn, Fe, Zn, Si, and Al, and $0<a2<1$, $0<b2<1$, $0<c2<1$, $0 \leq d2<0.1$, and $a2+b2+c2+d2=1$.

The present inventors have found that if the mixture obtained by mixing the positive electrode active material precursor with a zirconium-containing raw material, a yttrium-containing raw material, and a lithium-containing raw material is sequentially subjected to primary firing at 800 °C to 900 °C, secondary firing at 940 °C to 970 °C, and then tertiary firing at 550 °C to 650 °C, a positive electrode active material having a uniform particle diameter is prepared, and the breakage of positive electrode active material particles is reduced during roll-pressing for the manufacture a lithium secondary battery, , and have completed the present invention.

### Step (A)

Step (A) above is a step of preparing a mixture by mixing a positive electrode active material precursor having a composition represented by Formula 2 above, a zirconium-containing raw material, an yttrium-containing raw material, and a lithium-containing raw material.

According to the present invention, the positive electrode active material precursor may include nickel (Ni) in an amount of 60 mol% or greater with respect to the total number of moles of transition metals included in the positive electrode active material precursor. In this case, the energy density of a lithium secondary battery may be improved.

According to the present invention, in Formula 2 above, the a2 represents the atomic fraction of nickel among metal elements in the composite transition metal hydroxide, and may be 0.6 or greater, 0.61 or greater, or 0.62 or greater, and 0.7 or less, 0.71 or less, 0.72 or less, 0.73 or less, 0.74 or less, 0.75 or less, 0.76 or less, 0.77 or less, 0.78 or less, 0.79 or less, 0.8 or less, 0.81 or less, 0.82 or less, 0.83 or less, 0.84 or less, 0.85 or less, 0.86 or less, 0.87 or less, 0.88 or less, 0.89 or less, 0.9 or less, 0.91 or less, 0.92 or less, 0.93 or less, 0.94 or less, 0.95 or less, 0.96 or less, 0.97 or less, 0.98 or less, 0.99 or less, or less than 1. When the a2 satisfies the above-described range, high-capacity properties of a battery including a positive electrode active material to be prepared as a result may be implemented, and particularly, if the a2 is 0.6 to 0.75, a battery including a positive electrode active material to be prepared as a result may exhibit a high energy density during high-voltage driving, so that high-capacity properties may be implemented.

According to the present invention, in Formula 2 above, the b2 represents the atomic fraction of cobalt among metal elements in the composite transition metal hydroxide, and may be greater than 0, 0.01 or greater, 0.02 or greater, 0.03 or greater, 0.04 or greater, or 0.05 or greater, and 0.10 or less, 0.11 or less, 0.12 or less, 0.13 or less, 0.14 or less, 0.15 or less, 0.16 or less, 0.17 or less, 0.18 or less, 0.19 or less, 0.20 or less, 0.21 or less, 0.22 or less, 0.23 or less, 0.24 or less, 0.25 or less, 0.26 or less, 0.27 or less, 0.28 or less, 0.29 or less, 0.30 or less, 0.31 or less, 0.32 or less, 0.33 or less, 0.34 or less, 0.35 or less, 0.36 or less, 0.37 or less, 0.38 or less, 0.39 or less, or less than 0.4. When the b2 satisfies the above-described range, stability in a process of charging and discharging a battery including a positive electrode active material to be prepared as a result may be improved, and rate properties may be improved.

According to the present invention, in Formula 2 above, the c2 represents the atomic fraction of manganese among metal elements in the composite transition metal hydroxide, and may be greater than 0, 0.01 or greater, 0.02 or greater, 0.03 or greater, 0.04 or greater, 0.05 or greater, 0.06 or greater, 0.07 or greater, 0.08 or greater, 0.09 or greater, 0.1 or greater, 0.11 or greater, 0.12 or greater, 0.13 or greater, 0.14 or greater, 0.15 or greater, 0.16 or greater, 0.17 or greater, 0.18 or greater, 0.19 or greater, 0.2 or greater, 0.21 or greater, 0.22 or greater, 0.23 or greater, 0.24 or greater, 0.25 or greater, 0.26 or greater, 0.27 or greater, 0.28 or greater, 0.29 or greater, or 0.30 or greater, and 0.32 or less, 0.33 or less, 0.34 or less, 0.35 or less, 0.36 or less, 0.37 or less, 0.38 or less, 0.39 or less, or less than 0.4. When the c2 satisfies the above-described range, high-capacity properties of a battery including a positive electrode active material to be prepared as a result may be implemented. In addition, high-temperature stability of the battery may increase, and a side reaction with an electrolyte solution may relatively decrease.

According to the present invention, in Formula 2 above, the d2 represents the atomic fraction of an $M^1$ element among metal elements in the composite transition metal hydroxide, and may be 0 or greater, and 0.01 or less, 0.02 or less, 0.03 or less, 0.04 or less, 0.05 or less, 0.06 or less, 0.07 or less, 0.08 or less, 0.09 or less, or 0.10 or less. When the d2 satisfies the above-described range, the crystal structure stability of a positive electrode active material to be prepared as a result may be improved, and the particle shape may be improved.

According to the present invention, the lithium-containing raw material may be a sulfate, a nitrate, an acetate, a carbonate, an oxalate, a citrate, a halide, a hydroxide, an oxyhydroxide, or the like, which contains lithium, and is not particularly limited as long as it can be dissolved in water. Specifically, the lithium-containing raw material may be $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, $Li_3C_6H_5O_7$, or the like, and any one thereof or a mixture of two or more thereof may be used.

According to the present invention, the positive electrode active material precursor and the lithium-containing raw material may be mixed such that a ratio (M:Li) of the total number of moles (M) of transition metals included in the positive electrode active material precursor to the number of moles of lithium (Li) included in the lithium-containing raw material is to be 1:1.03 to 1.07. In this case, a positive electrode active material to be prepared as a result may have a desired size of a primary particle, and the lifespan and resistance properties of a battery may be improved.

According to the present invention, the zirconium (Zr)-containing raw material may be one or more selected from $Zr(OH)_4$, $ZrO_2$, $Zr(NO_3)_4$, $ZrCl_4$, $ZrS_2$, $Zr(SO_4)_2$, and $C_8H_{12}O_8Zr$, specifically, one or more selected from $ZrO_2$, $Zr(OH)_4$, and $Zr(NO_3)_4$, and more specifically, $ZrO_2$.

According to the present invention, the zirconium-containing raw material may be added in an amount such that zirconium is 1,000 ppm to 4,000 ppm with respect to the total weight of the positive electrode active material precursor. Specifically, the zirconium-containing raw material may be added in an amount such that zirconium is, with respect to the total weight of the composite transition metal hydroxide, 1,000 ppm or greater, 1,100 ppm or greater, 1,200 ppm or greater, 1,300 ppm or greater, or 1,400 ppm or greater, and 1,500 ppm or less, 1,600 ppm or less, 1,700 ppm or less, 1,800 ppm or less, 1,900 ppm or less, 2,000 ppm or less, 2,100 ppm or less, 2,200 ppm or less, 2,300 ppm or less, 2,400 ppm or less, 2,500 ppm or less, 2,600 ppm or less, 2,700 ppm or less, 2,800 ppm or less, 2,900 ppm or less, 3,000 ppm or less, 3,100 ppm or less , 3,200 ppm or less, 3,300 ppm or less, 3,400 ppm or less, 3,500 ppm or less, 3,600 ppm or less, 3,700 ppm or less, 3,800 ppm or less, 3,900 ppm or less, or 4,000 ppm or less. In this case, Zr is stably doped on a transition metal layer, so that a stable structure may be maintained even if the intercalation and deintercalation of lithium are repeated due to repeated charging and discharging.

According to the present invention, the yttrium (Y)-containing raw material may be one or more selected from $YCl_3$, $Y_2O_3$, $Y(NO_3)_3$, $Y(OH)_3$, $YSZ$, $Y_2(SO4)_3$, and $Y_2S_3$, specifically, one or more selected from $Y_2O_3$, $Y(OH)_3$, and $YSZ$, and more specifically, $Y_2O_3$.

According to the present invention, the yttrium-containing raw material may be added in an amount such that yttrium is 1,000 ppm to 4,000 ppm with respect to the total weight of the positive electrode active material precursor. Specifically, the yttrium-containing raw material may be added in an amount such that yttrium is, with respect to the total weight of the composite transition metal hydroxide, 1,000 ppm or greater, 1,100 ppm or greater, 1,200 ppm or greater, 1,300 ppm or greater, 1,400 ppm or greater, 1,500 ppm or greater, 1,600 ppm or greater, 1,700 ppm or greater, 1,800 ppm or greater, 1,900 ppm or greater, 2,000 ppm or greater, 2,100 ppm or greater, 2,200 ppm or greater, 2,300 ppm or greater, 2,400 ppm or greater, 2,500 ppm or greater, 2,600 ppm or greater, 2,700 ppm or greater, 2,800 ppm or greater, or 2,900 ppm or greater, and 3,000 ppm or less, 3,100 ppm or less, 3,200 ppm or less, 3,300 ppm or less, 3,400 ppm or less, 3,500 ppm or less, 3,600 ppm or less, 3,700 ppm or less, 3,800 ppm or less, 3,900 ppm or less, or 4,000 ppm or less. In this case, Y acts as a flux material during firing, so that an optimal primary particle size may be implemented even at a relatively low temperature, which is advantageous for resistance or rate properties.

**Step (B)**

Step (B) above is a step of, under an atmospheric atmosphere, sequentially subjecting the mixture to primary firing at 600 °C to 850 °C, secondary firing at 960 °C to 970 °C, and then tertiary firing at 500 °C to 850 °C to prepare a fired product.

According to the present invention, when the mixture is subjected to primary firing at 600 °C to 850 °C, the lithium-containing raw material is dissolved and sufficiently uniformly distributed on the surface of the precursor, and as a result, lithium and the precursor effectively react, so that an active material having a uniform primary particle shape may be prepared. The primary firing temperature may specifically be 600 °C or higher, 650 °C or higher, 700 °C or higher, or 750 °C or higher, and 800 °C or lower, or 850 °C or lower. If the primary firing temperature is within the above-described range, the lithium-containing raw material may be dissolved and sufficiently uniformly distributed on the surface of the precursor. Meanwhile, if the primary firing temperature is lower than 600 °C, there is a problem in that the lithium-containing raw material is not sufficiently dissolved, and if higher than 850 °C, the lithium-containing raw material may be intercalated into the precursor before being dissolved and sufficiently uniformly distributed, so that an active material having a relatively non-uniform shape may be prepared.

According to the present invention, the primary firing is performed under an atmospheric atmosphere, in terms of uniform distribution of the lithium-containing raw material.

According to the present invention, the primary firing may be performed for 1 hour to 8 hours. In this case, the lithium-containing raw material may be dissolved and sufficiently uniformly distributed on the surface of the precursor.

Immediately after the primary firing is completed, if the temperature is continuously raised to 960 °C to 970 °C, and the secondary firing is performed at 960 °C to 970 °C, lithium is intercalated into the precursor, thereby forming a layered structure, and interfaces of primary particles are combined with each other to achieve the growth of the primary particles. If the secondary firing temperature is within the above-described range, an optimal primary particle size may be implemented, so that the capacity, resistance, and lifespan of a battery, as well as particle breakage and roll-pressing density, may also express optimal performance. Meanwhile, if the secondary firing temperature is lower than 960 °C, the size of a primary particle decreases, so that there is a problem in that particle breakage and roll-pressing density are deteriorated, and if higher than 970 °C, the size of a primary particle size increases, so that there is a problem in that efficiency and resistance performance are deteriorated.

The secondary firing is performed under an atmospheric atmosphere, in terms of proper growth of the primary particles.

According to the present invention, the secondary firing may be performed for 3 hours to 12 hours. In this case, lithium may be sufficiently intercalated into the precursor, and the growth of the primary particles may also be appropriately achieved.

Immediately after the secondary firing is completed, if the temperature is continuously raised to 500 °C to 850 °C, and the tertiary firing is performed at 500 °C to 850 °C, defects in the crystal structure of the active material caused by the high temperature of secondary firing are mitigated, so that a fired product with fewer structural defects are manufactured. The tertiary firing temperature may specifically be 500 °C or higher, 510 °C or higher, 520 °C or higher, 530 °C or higher, 540 °C or higher, 550 °C or higher, 560 °C or higher, 570 °C or higher, 580 °C or higher, 590 °C or higher, or 600 °C or higher, and 650 °C or lower, 660 or lower, 670 or lower, 680 or lower, 690 or lower, 700 or lower, 710 or lower, 720 or lower, 730 or lower, 740 or lower, 750 or lower, 760 or lower, 770 or lower, 780 or lower, 790 or lower, 800 or lower, 810 or lower, 820 or lower, 830 or lower, 840 or lower, or 850 or lower. At this time, the fired product is a lithium composite transition metal oxide in the form of a single particle. If the tertiary firing temperature is within the above-described range, the structural defects may be effectively mitigated. Meanwhile, if the tertiary firing temperature is lower than 500 °C or higher than 850 °C, the structural defects may not be effectively mitigated.

The tertiary firing is performed under an atmospheric atmosphere, in terms of minimizing the structural defects.

According to the present invention, the tertiary firing may be performed for 1 hour to 8 hours. In this case, defects in the crystal structure may be minimized.

The method for preparing a positive electrode active material according to the present invention may further include (C) finely pulverizing the fired product, in terms of effective manufacture of an electrode and an efficient reaction at the interface of active material-electrolyte. The fine pulverization may be performed such that the $D_{50}$ of the positive electrode active material as measured by using a particle size analyzer (PSA) is to be 3.5 μm to 4.0 μm.

According to the present invention, the fine pulverization may be performed by vortex flow-type pulverization. In this case, compared to typical physical pulverization, not only the pulverization efficiency is good, but also heat is not generated, so that the denaturation of the surface of the active material may be suppressed.

According to the present invention, the vortex flow-type pulverization may be performed under a pressure of 1 bar to 5 bar. In this case, a target particle size may be effectively reached.

The method for preparing a positive electrode active material according to the present invention may further include (C') mixing the fired product with one or more selected from an aluminum raw material, and a tungsten raw material, and then heat-treating the mixture, thereby forming a coating layer containing one or more selected from Al and W on the fired product. In this case, a coating portion containing one or more selected from Al and W is formed on the fired product (the lithium composite transition metal oxide in the form of a single particle).

According to the present invention, the aluminum raw material may be one or more selected from $Al_2O_3$, $Al(OH)_3$, $AlCl_3$, $AlF_3$, and $Al_2(SO_4)_3$, specifically, one or more selected from $Al_2O_3$, $Al(OH)_3$, and $AlF_3$, and more specifically, $Al_2O_3$.

According to the present invention, the aluminum raw material may be added in an amount such that aluminum is 1,000 ppm to 2,000 ppm with respect to the total weight of the fired product. Specifically, the aluminum raw material may be added in an amount such that aluminum is, with respect to the total weight of the fired product, 1,000 ppm or greater, 1,100 ppm or greater, 1,200 ppm or greater, 1,300 ppm or greater, or 1,400 ppm or greater, and 1,500 ppm or less, 1,600 ppm or less, 1,700 ppm or less, 1,800 ppm or less, 1,900 ppm or less, or 2,000 ppm or less.

In this case, a capacity retention rate according to charging and discharging may be improved.

According to the present invention, the tungsten raw material may be one or more selected from $WO_3$, $WC$, and $H_2WO_4$, and more specifically, $WO_3$.

According to the present invention, the tungsten raw material may be added in an amount such that tungsten is 2,000 ppm to 4,000 ppm with respect to the total weight of the fired product. Specifically, the tungsten raw material may be added in an amount such that tungsten is, with respect to the total weight of the fired product, 2,000 ppm or greater, 2,100 ppm or greater, 2,200 ppm or greater, 2,300 ppm or greater, 2,400 ppm or greater, 2,500 ppm or greater, 2,600 ppm or greater, 2,700 ppm or greater, 2,800 ppm or greater, or 2,900 ppm or greater, and 3,000 ppm or less, 3,100 ppm or less, 3,200 ppm or less, 3,300 ppm or less, 3,400 ppm or less, 3,500 ppm or less, 3,600 ppm or less, 3,700 ppm or less, 3,800 ppm or less, 3,900 ppm or less, or 4,000 ppm or less. In this case, output performance may be improved when a battery is driven.

According to the present invention, the heat-treatment may be performed at 400 °C to 600 °C. In this case, lifespan performance of the positive electrode active material may be further improved.

According to the present invention, the heat-treatment may be performed under an atmospheric atmosphere, in terms of surface stabilization.

According to the present invention, the heat-treatment may be performed for 3 hours to 12 hours. In this case, through the surface stabilization of the positive electrode active material, a side reaction between the positive electrode active material and an electrolyte solution due to repeated charging and discharging is suppressed, though which the lifespan performance of a battery may be improved.

## Positive electrode

The present invention provides a positive electrode including the above-described positive electrode active material.

The positive electrode may include a positive electrode current collector, and a positive electrode active material layer formed on the positive electrode current collector, and the positive electrode active material layer may include the above-described positive electrode active material.

The positive electrode current collector may include a highly conductive metal, and is not particularly limited as long as it is not reactive in a voltage range of a battery while a positive electrode active material layer is able to be easily adhered to the positive electrode current collector. As the positive electrode current collector, for example, stainless steel, aluminum, nickel, titanium, fired carbon, or aluminum or stainless steel that is surface-treated with one of carbon, nickel, titanium, silver, and the like may be used. In addition, the positive electrode current collector may typically have a thickness of 3 μm to 500 μm, and microscopic irregularities may be formed on the surface of the current collector to improve the adhesion of the positive electrode active material. For example, the positive electrode current collector may be used in various forms such as a film, a sheet, a foil, a net, a porous body, a foam, and a non-woven body.

The positive electrode active material layer may selectively include, if necessary, a conductive material and a binder together with the positive electrode active material. In this case, the positive electrode active material may be included in a content of 80 wt% to 99 wt%, more specifically, 85 wt% to 98.5 wt% with respect to the total weight of the positive electrode active material layer, and may exhibit excellent capacity performance within the above-described ranges.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber of such as copper, nickel, aluminum, and silver; a conductive tube such as a carbon nanotube; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.1 wt% to 15 wt% with respect to the total weight of the positive electrode active material layer.

The binder serves to improve the bonding between positive electrode active material particles and the adhesive force between the positive electrode active material and the current collector. Specific examples thereof may include polyvinylidene fluoride (PVDF), a polyvinylidene fluoridehexafluoropropylene copolymer (PVDF-co-HFP), polyvinyl alcohol, polyacrylonitrile, polymethymethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, a poly acrylic acid, a polymer having the hydrogen thereof substituted with Li, Na, or Ca, or various copolymers thereof, and any one thereof or a mixture of two or more thereof may be used. The binder may be included in an amount of 0.1 wt% to 15 wt% with respect to the total weight of the positive electrode active material layer.

The positive electrode may be manufactured according to a typical method for manufacturing a positive electrode except that the positive electrode active material described above is used. Specifically, the positive electrode may be manufactured by applying a composition for forming a positive electrode active material layer, which is prepared by dissolving or dispersing the above-described positive electrode active material, and selectively, if necessary, a binder, a conductive material, and a dispersant in a solvent, on a positive electrode current collector, followed by drying and roll-pressing, or manufactured by casting the composition for forming a positive electrode active material layer on a separate support, and then laminating a film obtained by peeling the same off from the support on the positive electrode current collector.

The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the solvent to be used is sufficient if the solvent dissolves or disperses the positive electrode active material, the conductive material, the binder, and the dispersant in consideration of the coating thickness of a slurry, and a manufacturing yield, and thereafter, allows the slurry to have a viscosity capable of exhibiting excellent thickness uniformity when applied for manufacturing the positive electrode.

## Lithium secondary battery

The present invention provides a lithium secondary battery including the above-described positive electrode, a negative electrode, a separator interposed between the positive electrode and the negative electrode, and an electrolyte.

The lithium secondary battery may selectively further include a battery case for accommodating an electrode assembly of the positive electrode, the negative electrode, and the separator, and a sealing member for sealing the battery case.

The negative electrode may include a negative electrode current collector, and a negative electrode active material layer positioned on the negative electrode current collector.

The negative electrode current collector is not particularly limited as long as it has high conductivity without causing a chemical change in a battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the negative electrode current collector may typically have a thickness of 3 $\mu$m to 500 $\mu$m, and as in the case of the positive electrode current collector, microscopic irregularities may be formed on the surface of the negative electrode current collector to improve the binding force of the negative electrode active material. For example, the negative electrode current collector may be used in various forms such as a film, a sheet, a foil, a net, a porous body, a foam, and a non-woven body.

The negative electrode active material layer may selectively include a binder and a conductive material together with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as $SiO_\beta$ ($0 < \beta < 2$), $SnO_2$, a vanadium oxide, and a lithium vanadium oxide; or a composite including the metallic compound and the carbonaceous material such as an Si-C composite or an Sn-C composite, and any one thereof or a mixture of two or more thereof may be used. In addition, a metal lithium thin film may be used as the negative electrode active material. In addition, low crystalline carbon, high crystalline carbon, and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, mesocarbon microbeads, mesophase pitches, and high-temperature fired carbon such as petroleum or coal tar pitch derived cokes. The negative electrode active material may be included in 80 wt% to 99 wt% based on the total weight of the negative electrode active material layer.

The binder of the negative electrode active material layer is a component for assisting in bonding between a conductive material, an active material, and a current collector, and is typically added in an amount of 0.1 wt% to 10 wt% based on the total weight of a negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, styrene-butadiene rubber, nitrile-butadiene rubber, fluorine rubber, various copolymers thereof, and the like.

The conductive material of the negative electrode active material layer is a component for further improving the conductivity of the negative electrode active material, and may be added in an amount of 10 wt% or less, preferably 5 wt% or less based on the total weight of the negative electrode active material layer. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; conductive fiber such as carbon fiber and metal fiber; fluorinated carbon; metal powder such as aluminum powder and nickel powder; a conductive whisker such as zinc oxide and potassium titanate; a conductive metal oxide such as titanium oxide; and a conductive material such as a polyphenylene derivative, or the like may be used.

The negative electrode may be prepared by applying a composition for forming a negative electrode active material layer, which is prepared by dissolving or dispersing a negative electrode active material, and selectively, a binder and a conductive material in a solvent, on a negative electrode current collector, followed by drying, or may be prepared by casting the composition for forming a negative electrode active material on a separate support, and then laminating a film obtained by peeling the same off from the support on the negative electrode current collector.

The separator is to separate the negative electrode and the positive electrode and to provide a movement path for lithium ions, and any separator may be used without particular limitation as long as it is a separator commonly used in a lithium secondary battery, and particularly, a separator having excellent moisture-retention of an electrolyte as well as low resistance to ion movement in the electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be selectively used in a singlelayered or a multi-layered structure.

The electrolyte may be an organic liquid electrolyte, an inorganic liquid electrolyte, a solid polymer electrolyte, a gel-type polymer electrolyte, a solid inorganic electrolyte, a molten-type inorganic electrolyte, and the like, which may be used in the manufacture of a lithium secondary battery, but is not limited thereto. As a specific example, the electrolyte may include an organic solvent and a lithium salt.

As the organic solvent, any organic solvent may be used without particular limitation as long as it can serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketonebased solvent such as cyclohexanone; an aromatic hydrocarbonbased solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

As the lithium salt, any compound may be used without particular limitation as long as it can provide lithium ions used in a lithium secondary battery. Specifically, anions of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAl0_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. The lithium salt may be used in a concentration range of 0.1 M to 2.0 M. If the concentration of the lithium salt is included in the above-described range, the electrolyte has suitable conductivity and viscosity, and thus, may exhibit excellent electrolyte performance, and lithium ions may effectively move.

In order to improve lifespan of a battery, suppress a decrease in battery capacity, improve discharge capacity of the battery, and the like, the electrolyte may further include one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, and the like. At this time, the additive may be included in an amount of 0.1 wt% to 5 wt% with respect to the total weight of the electrolyte.

A lithium secondary battery including the above-described positive electrode active material according to the present invention has excellent performance, and thus, is useful for portable devices such as a mobile phone, a notebook computer, and a digital camera, and in the field of electric cars such as a hybrid electric vehicle (HEV).

The external shape of the lithium secondary battery of the present invention is not particularly limited, but may be a cylindrical shape using a can, a square shape, a pouch shape, a coin shape, or the like.

The lithium secondary battery according to the present invention may be used in a battery cell which is used as a power source for a small-sized device, and may also be preferably used as a unit cell for a medium- and large-sized battery module including a plurality of battery cells.

Accordingly, a battery module including the lithium secondary battery as a unit cell, and a battery pack including the battery module are provided.

The battery module or the battery pack may be used as a power source for a power tool, an electric car including an electric vehicle (EV), a hybrid electric vehicle, and a plugin hybrid electric vehicle (PHEV), or one or more medium-to-large devices in a system for power storage.

## MODE FOR CARRYING OUT THE INVENTION

Hereinafter, embodiments of the present invention will be described in detail so that those skilled in the art may easily carry out the present invention. However, the present invention may be embodied in many different forms, and is not limited to the embodiments set forth herein.

## Examples and Comparative Examples

### Example 1

A composite transition metal hydroxide (composition: $Ni_{0.62}Co_{0.06}Mn_{0.32}(OH)_2$, $D_{50}$: 3.5 $\mu$m) in the form of a secondary particle formed by aggregation of tens to hundreds of primary particles, $ZrO_2$ (introduced in an amount such that Zr was to be 1500 ppm with respect to the total weight of the composite transition metal hydroxide), and $Y_2O_3$ (introduced in an amount such that Y was to be 3000 ppm with respect to the total weight of the composite transition metal hydroxide) were introduced into an acoustic mixer, and sequentially mixed at 40 g (g: gravitational acceleration) for 2 minutes, at 80 g for 1 minute, and at 50 g for 2 minutes. Thereafter, $Li_2CO_3$ was introduced into the acoustic mixer such that a ratio ((Ni+Co+Mn):Li) of the total number of moles of transition metals (Ni+Co+Mn) included in the composite transition metal hydroxide to the number of moles of lithium (Li) included in $Li_2CO_3$ was to be 1:1.05, and sequentially mixed at 40 g (g: gravitational acceleration) for 2 minutes, at 80 g for 1 minute, and at 50 g for 2 minutes to prepare a mixture.

The mixture was introduced into a square alumina crucible (150mm×150mm), subjected to primary firing at 850 °C for 4 hours under an atmospheric atmosphere, subjected to secondary firing at 965 °C for 6 hours after the temperature was continuously raised to 965 °C (temperature raising rate: 1.3 °C/min), and then subjected to tertiary firing at 600 °C for 3 hours after the temperature was continuously lowered to 600 °C (temperature lowering rate: 4 °C/min) to prepare a fired product.

The fired product was finely pulverized under 4 bar for 10 minutes by using a jet mill (2-inch Air Jet Mill, Isaac ENC Co., Ltd.).

The finely pulverized fired product was mixed with $Al_2O_3$ (introduced in an amount such that Al was to be 1500 ppm with respect to the total weight of the fired product) and $WO_3$ (introduced in an amount such that W was to be 3000 ppm with respect to the total weight of the fired product), and then heat-treated at 500 °C under an atmospheric atmosphere to prepare a positive electrode active material including a coating layer containing Al and W.

**Example 2**

A composite transition metal hydroxide (composition: $Ni_{0.62}Co_{0.06}Mn_{0.32}(OH)_2$, $D_{50}$: 3.5 $\mu$m) in the form of a secondary particle formed by aggregation of tens to hundreds of primary particles, $ZrO_2$ (introduced in an amount such that Zr was to be 1500 ppm with respect to the total weight of the composite transition metal hydroxide), and $Y_2O_3$ (introduced in an amount such that Y was to be 3000 ppm with respect to the total weight of the composite transition metal hydroxide) were introduced into an acoustic mixer, and sequentially mixed at 40 g (g: gravitational acceleration) for 2 minutes, at 80 g for 1 minute, and at 50 g for 2 minutes. Thereafter, $Li_2CO_3$ was introduced into the acoustic mixer such that a ratio ((Ni+Co+Mn):Li) of the total number of moles of transition metals (Ni+Co+Mn) included in the composite transition metal hydroxide to the number of moles of lithium (Li) included in $Li_2CO_3$ was to be 1:1.04, and sequentially mixed at 40 g (g: gravitational acceleration) for 2 minutes, at 80 g for 1 minute, and at 50 g for 2 minutes to prepare a mixture.

The mixture was introduced into a square alumina crucible (150 mm×150 mm), subjected to primary firing at 850 °C for 4 hours under an atmospheric atmosphere, subjected to secondary firing at 965 °C for 6 hours after the temperature was continuously raised to 965 °C (temperature raising rate: 1.3 °C/min), and then subjected to tertiary firing at 600 °C for 3 hours after the temperature was continuously lowered to 600 °C (temperature lowering rate: 4 °C/min) to prepare a fired product.

The fired product was finely pulverized under 4 bar for 10 minutes by using a jet mill (2-inch Air Jet Mill, Isaac ENC Co., Ltd.).

The finely pulverized fired product was mixed with $Al_2O_3$ (introduced in an amount such that Al was to be 1500 ppm with respect to the total weight of the fired product) and $WO_3$ (introduced in an amount such that W was to be 3000 ppm with respect to the total weight of the fired product), and then heat-treated at 500 °C under an atmospheric atmosphere to prepare a positive electrode active material including a coating layer containing Al and W.

**Example 3**

A composite transition metal hydroxide (composition: $Ni_{0.62}Co_{0.06}Mn_{0.32}(OH)_2$, $D_{50}$: 3.5 $\mu$m) in the form of a secondary particle formed by aggregation of tens to hundreds of primary particles, $ZrO_2$ (introduced in an amount such that Zr was to be 1500 ppm with respect to the total weight of the composite transition metal hydroxide), and $Y_2O_3$ (introduced in an amount such that Y was to be 3000 ppm with respect to the total weight of the composite transition metal hydroxide) were introduced into an acoustic mixer, and sequentially mixed at 40 g (g: gravitational acceleration) for 2 minutes, at 80 g for 1 minute, and at 50 g for 2 minutes. Thereafter, $Li_2CO_3$ was introduced into the acoustic mixer such that a ratio ((Ni+Co+Mn):Li) of the total number of moles of transition metals (Ni+Co+Mn) included in the composite transition metal hydroxide to the number of moles of lithium (Li) included in $Li_2CO_3$ was to be 1:1.06, and sequentially mixed at 40 g (g: gravitational acceleration) for 2 minutes, at 80 g for 1 minute, and at 50 g for 2 minutes to prepare a mixture.

The mixture was introduced into a square alumina crucible (150 mm×150 mm), subjected to primary firing at 850 °C for 4 hours under an atmospheric atmosphere, subjected to secondary firing at 965 °C for 6 hours after the temperature was continuously raised to 965 °C (temperature raising rate: 1.3 °C/min), and then subjected to tertiary firing at 600 °C for 3 hours after the temperature was continuously lowered to 600 °C (temperature lowering rate: 4 °C/min) to prepare a fired product.

The fired product was finely pulverized under 4 bar for 10 minutes by using a jet mill (2-inch Air Jet Mill, Isaac ENC Co., Ltd.).

The finely pulverized fired product was mixed with $Al_2O_3$ (introduced in an amount such that Al was to be 1500 ppm with respect to the total weight of the fired product) and $WO_3$ (introduced in an amount such that W was to be 3000 ppm with respect to the total weight of the fired product), and then heat-treated at 500 °C under an atmospheric atmosphere to prepare a positive electrode active material including a coating layer containing Al and W.

**Comparative Example 1**

A composite transition metal hydroxide (composition: $Ni_{0.62}Co_{0.06}Mn_{0.32}(OH)_2$, $D_{50}$: 3.5 $\mu$m) in the form of a secondary particle formed by aggregation of tens to hundreds of primary particles, $ZrO_2$ (introduced in an amount such that Zr was to be 1500 ppm with respect to the total weight of the composite transition metal hydroxide), and $Y_2O_3$ (introduced in an amount such that Y was to be 3000 ppm with respect to the total weight of the composite transition metal hydroxide) were introduced into an acoustic mixer, and sequentially mixed at 40 g (g: gravitational acceleration) for 2 minutes, at 80 g for 1 minute, and at 50 g for 2 minutes. Thereafter, $Li_2CO_3$ was introduced into the acoustic mixer such that a ratio ((Ni+Co+Mn):Li) of the total number of moles of transition metals (Ni+Co+Mn) included in the composite transition metal hydroxide to the number of moles of lithium (Li) included in $Li_2CO_3$ was to be 1:1.05, and sequentially mixed at 40 g (g: gravitational acceleration) for 2 minutes, at 80 g for 1 minute, and at 50 g for 2 minutes to prepare a mixture.

The mixture was introduced into a square alumina crucible (150 mm×150 mm), subjected to primary firing at 850 °C for 4 hours under an atmospheric atmosphere, subjected to secondary firing at 955 °C for 6 hours after the temperature was continuously raised to 955 °C (temperature raising rate: 1.3 °C/min), and then subjected to tertiary firing at 600 °C for 3 hours after the temperature was continuously lowered to 600 °C (temperature lowering rate: 4 °C/min) to prepare a fired product.

The fired product was finely pulverized under 4 bar for 10 minutes by using a jet mill (2-inch Air Jet Mill, Isaac ENC Co., Ltd.).

The finely pulverized fired product was mixed with $Al_2O_3$ (introduced in an amount such that Al was to be 1500 ppm with respect to the total weight of the fired product) and $WO_3$ (introduced in an amount such that W was to be 3000 ppm with respect to the total weight of the fired product), and then heat-treated at 500 °C under an atmospheric atmosphere to prepare a positive electrode active material including a coating layer containing Al and W.

**Comparative Example 2**

A composite transition metal hydroxide (composition: $Ni_{0.62}Co_{0.06}Mn_{0.32}(OH)_2$, $D_{50}$: 3.5 $\mu$m) in the form of a secondary particle formed by aggregation of tens to hundreds of primary particles, $ZrO_2$ (introduced in an amount such that Zr was to be 1500 ppm with respect to the total weight of the composite transition metal hydroxide), and $Y_2O_3$ (introduced in an amount such that Y was to be 3000 ppm with respect to the total weight of the composite transition metal hydroxide) were introduced into an acoustic mixer, and sequentially mixed at 40 g (g: gravitational acceleration) for 2 minutes, at 80 g for 1 minute, and at 50 g for 2 minutes. Thereafter, $Li_2CO_3$ was introduced into the acoustic mixer such that a ratio ((Ni+Co+Mn):Li) of the total number of moles of transition metals (Ni+Co+Mn) included in the composite transition metal hydroxide to the number of moles of lithium (Li) included in $Li_2CO_3$ was to be 1:1.05, and sequentially mixed at 40 g (g: gravitational acceleration) for 2 minutes, at 80 g for 1 minute, and at 50 g for 2 minutes to prepare a mixture.

The mixture was introduced into a square alumina crucible (150 mm×150 mm), subjected to primary firing at 850 °C for 4 hours under an atmospheric atmosphere, subjected to secondary firing at 975 °C for 6 hours after the temperature was continuously raised to 975 °C (temperature raising rate: 1.3 °C/min), and then subjected to tertiary firing at 600 °C for 3 hours after the temperature was continuously lowered to 600 °C (temperature lowering rate: 4 °C/min) to prepare a fired product.

The fired product was finely pulverized under 4 bar for 10 minutes by using a jet mill (2-inch Air Jet Mill, Isaac ENC Co., Ltd.).

The finely pulverized fired product was mixed with $Al_2O_3$ (introduced in an amount such that Al was to be 1500 ppm with respect to the total weight of the fired product) and $WO_3$ (introduced in an amount such that W was to be 3000 ppm with respect to the total weight of the fired product), and then heat-treated at 500 °C under an atmospheric atmosphere to prepare a positive electrode active material including a coating layer containing Al and W.

## Experimental Examples

### Experimental Example 1: Analysis of shape of positive electrode active material

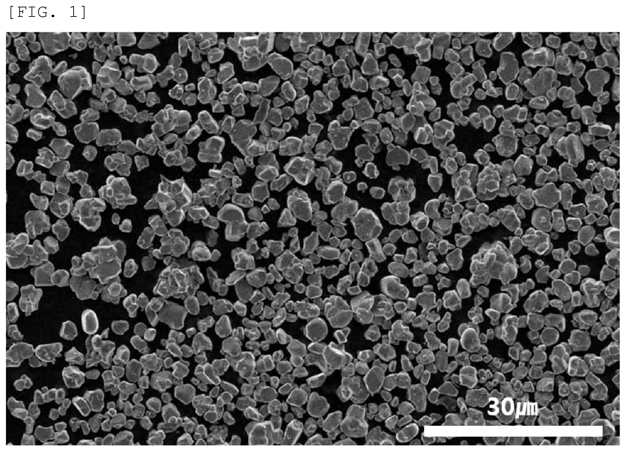

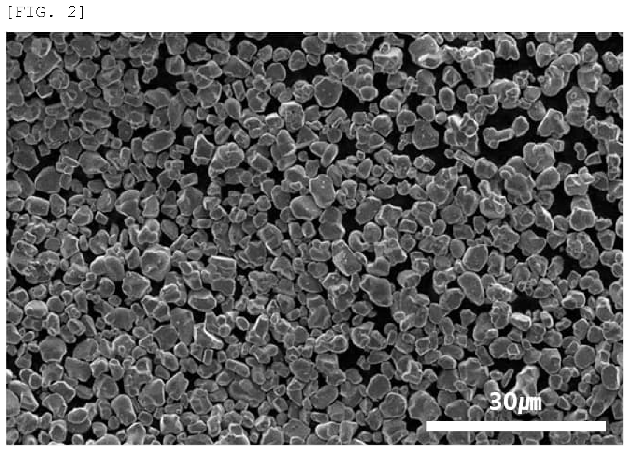

An SEM image of each of the positive electrode active materials prepared in Examples 1 and 3 was obtained by using SEM (FEI Co., Ltd., Inspect F). Then, the SEM image of the positive electrode active material of Example 1 is shown in FIG. 1, and the SEM image of the positive electrode active material of Example 3 is shown in FIG. 2.

Referring to FIGS. 1 and 3, it can be confirmed that the positive electrode active materials of Examples 1 and 3 are in the form of a single particle.

### Experimental Example 2: Analysis of ICP

0.1 g of each of the fired products (hereinafter, referred to as a lithium composite transition metal oxide) prepared in Examples and Comparative Examples was taken, added with 1 ml of hydrochloric acid, and then heated to dissolve the lithium composite transition metal oxide. Thereafter, in order to accelerate the reaction, a small amount of hydrogen peroxide water was added to completely dissolve the lithium composite transition metal oxide, thereby preparing a solution. Then, the solution was diluted with deionized water such that the total volume of the solution was to be 10 mL, thereby preparing an analysis sample. An ICP device (ICP-OES; Agilent 5110, Agilent Technologies Co., Ltd.) was used to measure the weight ratio of constituent elements present in the analysis sample, and the composition of the lithium composite transition metal oxide, and the content (ppm) of Zr and the content (ppm) of Y, which are present in the lithium composite transition metal oxide, are shown in Table 1 below.

[Table 1]

| Class ification | Lithium composite transition metal oxide composition | Conte nt of Zr (ppm) | Conte nt of Y (ppm) |
|---|---|---|---|
| Example 1 | $Li[Ni_{0.62}Co_{0.06}Mn_{0.32}]_{0.997}Zr_{0.0015}Y_{0.0015} O_2$ | 1484 | 2988 |
| Example 2 | $Li[Ni_{0.62}Co_{0.06}Mn_{0.32}]_{0.997}Zr_{0.0015}Y_{0.0015} O_2$ | 1471 | 2998 |
| Example 3 | $Li[Ni_{0.62}Co_{0.06}Mn_{0.32}]_{0.997}Zr_{0.0015}Y_{0.0015} O_2$ | 1487 | 2986 |
| Comparative Example 1 | $Li[Ni_{0.62}Co_{0.06}Mn_{0.32}]_{0.997}Zr_{0.0015}Y_{0.0015} O_2$ | 1482 | 2989 |
| Comparative Example 2 | $Li[Ni_{0.62}Co_{0.06}Mn_{0.32}]_{0.997}Zr_{0.0015}Y_{0.0015} O_2$ | 1476 | 2992 |

From Table 1 above, it has been confirmed that the lithium composite transition metal oxides prepared in Examples 1 to 3 have a composition represented by Formula 1 described in the present specification, and include doping elements Zr and Y.

**Experimental Example 3: (1) Analysis of particle size of positive electrode active material**

An SEM (FEI Co., Ltd., Inspect F) was used to obtain an SEM image of each of the positive electrode active materials prepared in Examples and Comparative Examples, and an image processing program (LG Chemical Co., Ltd., DX program) was used to divide boundaries of primary particles present in the SEM image, thereby obtaining images shown in random colors.

The images shown in random colors obtained by dividing the boundaries of the primary particles were used to calculate the area of each of the primary particles through the number of pixels corresponding to each of n primary particles (on average 50,000 or more primary particles), a radius ($r_i$) of a circle having the same area as the area of each of the primary particles was used to obtain a particle diameter ($D_i=2r_i$) of each of the primary particles present in the SEM image, the areas of primary particles having a particle diameter of 1 $\mu$m or less among the primary particles were added to obtain the sum of areas of the primary particles having a particle diameter of 1 $\mu$m or less, and the areas of all primary particles were added to obtain the sum of the areas of all primary particles, followed by obtaining a small particle ratio according to Equation 1 described in the present specification, which are shown in Table 2 below.

In addition, the images shown in random colors obtained by dividing the boundaries of the primary particles were used to calculate the area of each of the primary particles through the number of pixels corresponding to each of n primary particles (on average 50,000 or more primary particles), a radius ($r_i$) of a circle having the same area as the area of each of the primary particles was used to obtain a particle diameter ($D_i=2r_i$) and a volume ($V_i=4/3\times\pi r_i^3$) of each of the primary particles present in the SEM image, and a particle diameter at a point of 50% in a volume cumulative distribution according to the particle diameter was calculated to obtain a $D_{v,50}$ value of the primary particles, which are shown in Table 2 below.

**Experimental Example 4: (2) Analysis of particle size of positive electrode active material**

0.01 g of each of the positive electrode active materials (powder) prepared in Examples and Comparative Examples was taken, placed in a vial containing 30 ml of ultrapure water and 500 $\mu$l of a dispersant, thereby dispersing the positive electrode active material for 1 minute using a sonicator, and then placed in a PSA (Microtrac Co., Ltd., S3500) to be analyzed, thereby confirming $D_{50}$, which is shown in Table 2 below.

At this time, the $D_{50}$ means a particle diameter at a point of 50% in a volume cumulative distribution according to a particle diameter.

**Experimental Example 5: Evaluation of amount of fine particle generation**

3 g of each of the positive electrode active materials (powder) prepared in Examples and Comparative Examples was taken, and then placed in a mold having an inner diameter of 13 mm and pressed at 9 tons for 1 minute, followed by confirming the number of particles having a particle diameter of less than 1 $\mu$m by using a PSA (Microtrac Co., Ltd., S3500). In addition, a ratio (amount of fine particle generation) of the number of particles having a particle diameter of less than 1 $\mu$m with respect to the total number of particles was calculated and is shown in Table 2 below.

**Experimental Example 6: Measurement of roll-pressing density**

5 g of each of the positive electrode active materials (powder) prepared in Examples and Comparative Examples was taken, and then placed in a mold having an inner diameter of 20 mm and pressed at 2 tons for 1 minute, followed by measuring the height of the mold after the pressurization. From the corresponding height, the volume after the application of the pressure to the 5 g of the positive electrode active material was calculated, and the weight of the active material per unit volume after the pressurization, that is, a roll-pressing density, was obtained, which are shown in Table 2 below.

[Table 2]

| Classificatio n | Small particle ratio (%) | $D_{v,50}$ (μm) of primary particles | $D_{50}$ (μm) as measured by using PSA | Amount of fine particle generatio n (%) | Roll-pressing density (g/cm³) |
|---|---|---|---|---|---|
| Example 1 | 7.4 | 2.7 | 3.5 | 0.4 | 2.81 |
| Example 2 | 6.5 | 2.5 | 3.6 | 0.6 | 2.74 |
| Example 3 | 8.0 | 2.9 | 3.8 | 0.4 | 2.84 |
| Comparative Example 1 | 14.6 | 2.1 | 3.6 | 2.9 | 2.67 |
| Comparative Example 2 | 2.5 | 3.8 | 3.9 | 0.1 | 2.89 |

Referring to Table 2 above, it can be confirmed that the positive electrode active materials of Examples 1 to 3 have a small particle ratio satisfying the range of 5% to 10%, and a $D_{v,50}$ of primary particles satisfying 2.2 μm to 3.7 μm, whereas the positive electrode active material of Comparative Example 1 has a high small particle ratio of greater than 10% and a $D_{v,50}$ of primary particles of less than 2.2 μm. In addition, it can be confirmed that the positive electrode active material of Comparative Example 2 has a small particle ratio of less than 5% and a $D_{v,50}$ of primary particles of greater than 3.7 μm.

Typically, the lower the amount of fine particle generation, the smaller the specific surface area in which particles and an electrolyte solution come into contact, so that a side reaction may be suppressed, a capacity retention rate according to charging and discharging may be improved, and gas generation may be reduced, which is advantageous. Meanwhile, the higher the roll-pressing density, the larger the amount of active material to be coated per unit volume when an electrode is manufactured, which is advantageous. However, since the amount of fine particle generation and the roll-pressing density are in a trade-off relationship with each other, it is necessary to find an optimal condition in consideration of other performance in combination.

**Experimental Example 7: Evaluation of battery performance**

Each of the positive electrode active materials prepared in Examples and Comparative Examples, a FX35 conductive material, and a polyvinylidene fluoride (PVDF) binder were mixed at a weight ratio of 95:3:2 in an N-methylpyrrolidone (NMP) solvent to prepare a positive electrode slurry. The positive electrode slurry was applied on one surface of an aluminum current collector, dried at 130 °C for 10 minutes or more, and then roll-pressed to manufacture a positive electrode.

A lithium metal electrode was used as a negative electrode, and a porous polyethylene separator was interposed between the positive electrode and the negative electrode to prepare an electrode assembly, and the electrode assembly was placed inside a battery case, followed by injecting an electrolyte solution into the battery case to manufacture a half-cell. At this time, the electrolyte solution was prepared by dissolving 1.0 M of $LiPF_6$ in an organic solvent in which ethylene carbonate (EC):ethyl methyl carbonate (EMC):diethyl carbonate (DEC) were mixed at a volume ratio of 3:4:3.

Each half-cell manufactured as described above was charged to 4.5 V with 0.1 C at 25 °C in a CC-CV mode, and discharged to 2.5 V with a constant current of 0.1 C, during which an initial charge capacity and an initial discharge capacity were measured, and an initial charge/discharge capacity, an initial efficiency, and a direct current internal resistance (DCIR) were calculated and are shown in Table 3 below. For reference, the initial efficiency value is a percentage value of the initial discharge capacity with respect to the initial charge capacity, and the DCIR value is a value calculated by dividing the difference between a voltage at 60 seconds and an initial voltage by the applied current while discharging the cell with a constant current of 0.1 C.

[Table 3]

| Classification | Ini tial charge capacity (mA h/g) | Ini tial discharge capacity (mA h/g) | Ini tial efficiency (%) | DCI R (Ω) |
|---|---|---|---|---|
| Example 1 | 223.0 | 202.0 | 90.6 | 33.6 |
| Example 2 | 222.3 | 200.9 | 90.4 | 32.1 |

(continued)

| Classification | Ini tial charge capacity (mA h/g) | Ini tial discharge capacity (mA h/g) | Ini tial efficiency (%) | DCI R (Ω) |
|---|---|---|---|---|
| Example 3 | 223.6 | 202.9 | 90.8 | 32.5 |
| Comparative Example 1 | 222.5 | 202.0 | 90.8 | 29.6 |
| Comparative Example 2 | 222.3 | 197.7 | 88.9 | 39.5 |

Referring to Table 2 and Table 3 above, the positive electrode active material of each of Examples 1 to 3 has a small particle ratio in the range of 5% to 10%, and a $D_{v,50}$ of primary particles satisfying 2.2 $\mu$m to 3.7 $\mu$m, and thus, when included in a battery, the battery is excellent in all of the capacity, initial efficiency, and resistance performance of the battery, compared to a battery including the positive electrode active material of each of Comparative Examples 1 and 2.

## Claims

1. A positive electrode active material comprising a lithium composite transition metal oxide having a composition represented by Formula 1 below, and in the form of a single particle composed of equal to or fewer than 10 primary particles,
   wherein the primary particles have a $D_{v,50}$ of 2.2 $\mu$m to 3.7 $\mu$m as derived from an SEM image, and have a small particle ratio of 5% to 10% according to Equation 1 below:

   [Formula 1] $\quad\quad Li_{1+x}Ni_{a1}Co_{b1}Mn_{c1}Zr_{d1}Y_{e1}M_{f1}O_{2-y}A_y$

   wherein in Formula 1 above,

   M is one or more selected from W, Cu, Sr, Mn, Ti, Mg, Mo, B, Sn, Fe, Zn, Si, and Al,
   A is one or more selected from F, Cl, Br, I, and S, and
   $-0.1 \leq x \leq 0.1$, $0 < a1 < 1$, $0 < b1 < 1$, $0 < c1 < 1$, $0 < d1 < 0.01$, $0 < e1 < 0.01$, $0 \leq f1 < 0.1$, $0 \leq y \leq 0.2$, and $a1+b1+c1+d1+e1+f1=1$, and

   [Equation 1] Small particle ratio (%) = (Sum of areas of primary particles having a particle diameter of 1 $\mu$m or less as derived from SEM image/sum of areas of all primary particles as derived from SEM image) $\times$ 100.   [Equation 1]

2. The positive electrode active material of claim 1, wherein the primary particles have a $D_{v,50}$ of 2.5 $\mu$m to 2.8 $\mu$m as derived from an SEM image.

3. The positive electrode active material of claim 1, wherein the positive electrode active material has a $D_{50}$ of 3.5 $\mu$m to 4 $\mu$m as measured by using a particle size analyzer (PSA).

4. The positive electrode active material of claim 1, wherein the lithium composite transition metal oxide is doped with 1000 ppm to 4000 ppm of Zr and 1000 ppm to 4000 ppm of Y.

5. The positive electrode active material of claim 1, wherein the positive electrode active material further comprises a coating layer formed on the lithium composite transition metal oxide, wherein the coating layer includes Al, W, or a combination thereof.

6. A positive electrode comprising the positive electrode active material according to any one of claim 1 to claim 5.

7. A lithium secondary battery comprising:

   the positive electrode according to claim 6;
   a negative electrode;

a separator interposed between the positive electrode and the negative electrode; and an electrolyte.

[FIG. 1]

[FIG. 2]

## INTERNATIONAL SEARCH REPORT

| International application No. |
|---|
| **PCT/KR2024/017103** |

### A. CLASSIFICATION OF SUBJECT MATTER

**H01M 4/525**(2010.01)i; **H01M 4/505**(2010.01)i; **H01M 4/36**(2006.01)i; **C01G 53/00**(2006.01)i; **H01M 4/131**(2010.01)i; **H01M 10/0525**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/525(2010.01); C01G 53/00(2006.01); H01M 10/052(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극 활물질(cathode active material), 단입자(single particle), 입경(particle size), 코팅(coating), 도핑(doping), 주사전자현미경(Scanning Electron Microscope, SEM), 소입경(small particle), 지르코늄(zirconium, Zr), 이트륨(yttrium, Y)

### C. DOCUMENTS CONSIDERED TO BE RELEVANT

| Category* | Citation of document, with indication, where appropriate, of the relevant passages | Relevant to claim No. |
|---|---|---|
| Y | KR 10-2023-0098072 A (LG ENERGY SOLUTION, LTD.) 03 July 2023 (2023-07-03)<br>See claims 1, 6-8, 10 and 13-15; and paragraphs [0066]-[0078], [0080], [0081], [0085], [0086], [0093], [0201], [0204] and [0206]-[0210]. | 1-7 |
| Y | JP 2022-009262 A (NICHIA CHEM IND. LTD.) 14 January 2022 (2022-01-14)<br>See claim 5; and paragraphs [0012], [0025], [0034], [0039], [0040], [0043] and [0059]. | 1-7 |
| A | KR 10-2021-0097646 A (LG ENERGY SOLUTION, LTD.) 09 August 2021 (2021-08-09)<br>See abstract; and claims 1-12. | 1-7 |
| A | JP 2017-188444 A (NICHIA CHEM IND. LTD.) 12 October 2017 (2017-10-12)<br>See abstract; and claims 1-9. | 1-7 |
| A | KR 10-2021-0018139 A (L & F CO., LTD.) 17 February 2021 (2021-02-17)<br>See abstract; and claims 1-17. | 1-7 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 February 2025** | **12 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/017103**

| Patent document cited in search report | | | Publication date (day/month/year) | Patent family member(s) | | | Publication date (day/month/year) |
|---|---|---|---|---|---|---|---|
| KR | 10-2023-0098072 | A | 03 July 2023 | CN | 118339677 | A | 12 July 2024 |
| | | | | EP | 4425611 | A1 | 04 September 2024 |
| | | | | JP | 2024-546664 | A | 26 December 2024 |
| | | | | KR | 10-2641896 | B1 | 29 February 2024 |
| | | | | US | 2023-0207799 | A1 | 29 June 2023 |
| | | | | WO | 2023-121389 | A1 | 29 June 2023 |
| JP | 2022-009262 | A | 14 January 2022 | JP | 2017-188443 | A | 12 October 2017 |
| | | | | JP | 2018-147889 | A | 20 September 2018 |
| | | | | JP | 2023-115074 | A | 18 August 2023 |
| | | | | JP | 6341312 | B2 | 13 June 2018 |
| | | | | JP | 6966703 | B2 | 17 November 2021 |
| | | | | JP | 7299520 | B2 | 28 June 2023 |
| | | | | JP | 7606120 | B2 | 25 December 2024 |
| | | | | US | 10115967 | B2 | 30 October 2018 |
| | | | | US | 10326132 | B2 | 18 June 2019 |
| | | | | US | 10700353 | B2 | 30 June 2020 |
| | | | | US | 11233238 | B2 | 25 January 2022 |
| | | | | US | 11728481 | B2 | 15 August 2023 |
| | | | | US | 12100836 | B2 | 24 September 2024 |
| | | | | US | 2017-0288221 | A1 | 05 October 2017 |
| | | | | US | 2019-0027749 | A1 | 24 January 2019 |
| | | | | US | 2019-0260023 | A1 | 22 August 2019 |
| | | | | US | 2020-0287212 | A1 | 10 September 2020 |
| | | | | US | 2022-0102716 | A1 | 31 March 2022 |
| | | | | US | 2023-0352673 | A1 | 02 November 2023 |
| | | | | US | 2024-0413321 | A1 | 12 December 2024 |
| KR | 10-2021-0097646 | A | 09 August 2021 | CN | 114868283 | A | 05 August 2022 |
| | | | | CN | 114868283 | B | 19 July 2024 |
| | | | | EP | 4064391 | A1 | 28 September 2022 |
| | | | | EP | 4064391 | A4 | 24 May 2023 |
| | | | | EP | 4064391 | B1 | 23 October 2024 |
| | | | | JP | 2023-511032 | A | 16 March 2023 |
| | | | | JP | 7463013 | B2 | 08 April 2024 |
| | | | | KR | 10-2644823 | B1 | 08 March 2024 |
| | | | | US | 2023-0034497 | A1 | 02 February 2023 |
| | | | | WO | 2021-154035 | A1 | 05 August 2021 |
| JP | 2017-188444 | A | 12 October 2017 | JP | 2018-125305 | A | 09 August 2018 |
| | | | | JP | 2022-009263 | A | 14 January 2022 |
| | | | | JP | 2023-093583 | A | 04 July 2023 |
| | | | | JP | 6341313 | B2 | 13 June 2018 |
| | | | | JP | 6966704 | B2 | 17 November 2021 |
| | | | | JP | 7265194 | B2 | 26 April 2023 |
| | | | | US | 10224547 | B2 | 05 March 2019 |
| | | | | US | 10529986 | B2 | 07 January 2020 |
| | | | | US | 11239464 | B2 | 01 February 2022 |
| | | | | US | 11728483 | B2 | 15 August 2023 |
| | | | | US | 12176536 | B2 | 24 December 2024 |
| | | | | US | 2017-0288222 | A1 | 05 October 2017 |
| | | | | US | 2019-0157673 | A1 | 23 May 2019 |
| | | | | US | 2020-0106098 | A1 | 02 April 2020 |

Form PCT/ISA/210 (patent family annex) (July 2022)

**INTERNATIONAL SEARCH REPORT**
Information on patent family members

International application No.

**PCT/KR2024/017103**

| Patent document cited in search report | | | Publication date (day/month/year) | Patent family member(s) | | | Publication date (day/month/year) |
|---|---|---|---|---|---|---|---|
| | | | | US | 2022-0112095 | A1 | 14 April 2022 |
| | | | | US | 2023-0352681 | A1 | 02 November 2023 |
| KR | 10-2021-0018139 | A | 17 February 2021 | KR | 10-2462560 | B1 | 02 November 2022 |
| | | | | US | 2023-0074377 | A1 | 09 March 2023 |
| | | | | WO | 2021-025479 | A1 | 11 February 2021 |

Form PCT/ISA/210 (patent family annex) (July 2022)

**REFERENCES CITED IN THE DESCRIPTION**

**Patent documents cited in the description**

- KR 1020230151123